## Europäisches Patentamt

## European Patent Office

## Office européen des brevets

(19)

(11) Veröffentlichungsnummer: **0 017 095**
**B1**

(12) **EUROPÄISCHE PATENTSCHRIFT**

(45) Veröffentlichungstag der Patentschrift:
12.05.82

(51) Int. Cl.³: **F 16 L 59/05**

(21) Anmeldenummer: **80101471.3**

(22) Anmeldetag: **20.03.80**

(54) Verfahren zur Herstellung von Elementen zur innenliegenden Wärmeisolation von Hochdruckbehältern oder Röhren, und ein nach diesem Verfahren hergestelltes Rohr.

(30) Priorität: **23.03.79 DE 2911416**

(43) Veröffentlichungstag der Anmeldung:
**15.10.80 Patentblatt 80/21**

(45) Bekanntmachung des Hinweises auf die Patenterteilung:
**12.05.82 Patentblatt 82/19**

(84) Benannte Vertragsstaaten:
**AT BE CH FR GB IT LU NL SE**

(56) Entgegenhaltungen:
**CH-A-561 388**
**DE-A-2 333 933**
**DE-A-2 750 457**
**US-A-3 231 339**

(73) Patentinhaber: **Schilf, Lothar, Am Freibad 9,
D-2807 Achim (DE)**

(72) Erfinder: **Schilf, Lothar, Am Freibad 9, D-2807 Achim
(DE)**

(74) Vertreter: **Eisenführ & Speiser, Martinistrasse 24,
D-2800 Bremen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Elementen zur innenliegenden Wärmeisolation von Hochdruckbehältern oder Röhren, und ein nach diesem Verfahren hergestelltes Rohr

Die Erfindung betrifft ein Verfahren zur Herstellung von Elementen zur innenliegenden Wärmeisolation von Hochdruckbehältern oder Röhren, bei dem eine vakuumdichte Hülle mit porösem, pulverförmigen Isoliermaterial gefüllt wird, welches bei und/oder nach dem Einfüllen zusammen mit der Hülle gasfrei ausgeheizt wird, und die gefüllte Hülle anschließend evakuiert und dann vakuumdicht verschlossen wird, sowie ein nach diesem Verfahren hergestelltes Rohr.

Aus der US-A-1 071 817 ist ein Behälter bekannt, der einen druckfesten Außenmantel besitzt. Der Raum zwischen dem Außenmantel und dem Behälter wird evakuiert, um die erwünschte Wärmeisolation zu erzeugen. Zusätzlich wird in den Zwischenraum zwischen Mantel und Behälter pulverförmiges Material mit Absorptionseigenschaften eingefüllt, um vom Mantel abgegebene bzw. durch Undichtigkeiten eindringende Gasmoleküle zu absorbieren und dadurch das Vakuum möglichst lange aufrechtzuerhalten. Es handelt sich um eine außenliegende Isolierung, die den Nachteil besitzt, daß der Behälter den Schwankungen des Betriebsdrucks und der -temperatur voll ausgesetzt ist, wodurch eine rasche Materialermüdung eintritt.

Aus der US-A 2 000 882 sowie aus der US-A 2 863 584 sind doppelwandige Behälter bekannt, deren Außenwände durch Abstandshalter voneinander beabstandet sind. Im Zwischenraum zwischen den Wänden wird pulverförmiges, poröses Füllmaterial, z. B. Kieselgur, eingefüllt. Ein innerhalb des Füllraumes angeordnetes Rohrsystem wird anschließend verwendet, um den Füllraum zu evakuieren. Der gegen die Wände wirkende Atmosphärendruck wird von den Abstandsstützen aufgefangen. Diese Stützen und die Absaugrohre stellen Wärmebrücken dar, welche die Isolationseigenschaften verschlechtern und für einen Einsatz bei hoher Temperatur unbrauchbar machen.

Nach der US-A 2 108 212 wird versucht, pulverförmigen Kohlenstoff zu brikettieren oder als Platten zu pressen und zwischen die beiden Wände einer evakuierbaren Hülle bzw. eines evakuierbaren doppelwandigen Behälters zu positionieren und dadurch die Wände gegeneinander abzustützen, um eine größere Festigkeit zu erreichen. Dabei hat es sich gezeigt, daß die mechanische Komprimierung des feinpulverigen Kohlenstoffes dazu führt, daß dieses Material zusammenbackt und dadurch seine an sich guten Isolationseigenschaften verliert. Dieser Effekt tritt ebenfalls ein, wenn pulverförmiger Kohlenstoff zwischen flexible dünne, abstandshalterfreie Hüllwände eingefüllt wird, die anschließend evakuiert werden.

Aus der US-A 2 164 143 ist ein Verfahren zur Herstellung von selbsttragenden Wärmeisolationselementen bekannt, die aus einer flexiblen dünnen Hülle bestehen, die mit einem pulverförmigen porösen Material, z. B. Kohlenstoff oder Kieselgur, gefüllt ist und anschließend evakuiert wird. Dieses Verfahren erfüllt seinen Zweck — nämlich die Herstellung maßgenauer Isolationselemente durch entsprechende Vorkomprimierung des Isoliermaterials beim Einfüllen — nur für Isolationselemente, die etwa bei Atmosphärendruck und relativ niedrigen Temperaturen eingesetzt werden, da nur dann die Kompensation zwischen dem von innen auf die Hülle wirkenden Vorkomprimierungsdruck und dem äußeren Atmosphärendruck gewährleistet ist. Für hohe Betriebsdrücke und -temperaturen besitzen derartige Isolationselemente keine ausreichende Steifigkeit und neigen dann zum unerwünschten Ausbeulen aufgrund der Druck- und Temperaturbelastung.

Aus der US-A-3 231 339 ist ein wärmeisoliertes Reaktionsgefäß bekannt, welches eine Innenwand, eine Außenwand und pulverförmiges Isoliermaterial zwischen beiden Wänden besitzt. Das Isoliermaterial steht kommunizierend mit dem Innenraum des Gefäßes in Verbindung, so daß der Betriebsdruck auf das Isoliermaterial und die Außenwand wirkt, während die Innenwand im wesentlichen keinen Druckbelastungen ausgesetzt ist.

Aufgabe der Erfindung ist es demgegenüber, ein Verfahren zur Herstellung von Elementen zur innenliegenden Wärmeisolation von Hochdruckbehältern oder Röhren anzugeben, die eine hervorragende Isolation und eine relativ große Maßhaltigkeit und Steifigkeit auch bei höchsten Druck- und Temperaturbelastungen bei langer Lebensdauer besitzen.

Diese Aufgabe wird erfindungsgemäß dadurch gelöst, daß nach dem Verschließen auf die Teile der Hülle, die die Innenwand bilden, ein vorgegebener hoher Druck aufgebracht wird, unter dem mindestens diese Teile der Hülle irreversibel verformt werden und das Isolationsmaterial nachkomprimiert wird.

Ein nach dem erfindungsgemäßen Verfahren hergestelltes wärmeisoliertes Rohr besitzt eine Außenhaut aus starrem Material, eine mit den stirnseitigen Endbereichen der Außenhaut verbundene Innenwand und ein gasfrei ausgeheiztes poröses und pulverförmiges Isoliermaterial in dem Raum zwischen Außenwand und Innenwand und ist dadurch gekennzeichnet, daß der gefüllte Raum zwischen Außenwand und Innenwand evakuiert und vakuumdicht verschlossen ist, und daß die Innenwand aus flexiblem Material besteht und irreversibel verformt gegen das Isoliermaterial anliegt.

Die Vorteile der Erfindung liegen insbesondere darin, daß die durch die irreversible Nachverformung der Innenwand Drücken von bis zu einigen hundert Bar, bei der sich die Innenwand über das Isoliermaterial an der Außenwand abstützt, eine relativ hohe Maßhaltigkeit und Steifigkeit der Elemente bei relativ geringer Stärke der Innenwand verwirklicht wird. Dadurch wird auch das bei stärkeren Temperaturschwankungen ansonsten auftretende unerwünschte Ausbeulen der Innenwand wirksam verringert, und durch innenliegende Isolation ausreichender Stärke wird die druckfeste Außenwand wirksam vor Temperaturbeanspruchung geschützt. Auf diese Weise hergestellte Wärmeisolationselemente halten hohen Drücken, bis hinaus zu einigen hundert Bar, und hohen Temperaturen, bis über 1000° C, langzeitig sicher stand und eignen sich insbesondere zum Einsatz für die Kohlevergasung, Kohleverflüssigung oder Wirbelschichtbefeuchtung von Kohlekraftwerken.

Als Isoliermaterial wird pulverige natürliche oder synthetische Kieselgur verwendet, welches eine geringe eigene Wärmeleitfähigkeit besitzt, nach außen offene kapillarförmige Poren enthält, und dessen einzelne Teilchen eine stark unregelmäßige Struktur besitzen, z. B. sternförmig, lanzettförmig, kugelförmig etc. sind. Die Teilchengröße dieses Materials liegt bevorzugt im Bereich von 1 bis etwa 100 Mikrometern, die Porengröße liegt im Bereich weniger Mikrometer. Dieses Material besitzt alle Eigenschaften, die zur kostengünstigen Herstellung von Wärmeisolationselementen höchster Qualität und sehr langer Lebensdauer und großer Maßhaltigkeit erforderlich sind. Die Festigkeit und Form des pulverigen Kieselgurs ermöglichen eine irreversible Komprimierbarkeit, wodurch eine gute Maßhaltigkeit und regelmäßige Oberfläche der Elemente auch ohne Einsatz stabilisierender Randverstärkungen etc. sowie der Einsatz in einer Hochdruck-Umgebung ohne weiteres möglich ist. Aufgrund der kapillaren Poren ist die Langzeit-Absorption sehr groß. Darüber hinaus kommt in einem vakuierten, mit Kieselgur gefüllten Isolationssystem die mittlere freie Weglänge der Restgase erst bei einem Druckwert von etwa 10 Torr in den Bereich der Porenweite, so daß erst oberhalb von etwa 10 Torr die Wärmeleitfähigkeit merklich zunimmt. Über einen Zeitraum von etwa 3 Monaten durchgeführte Versuche, die bei einem unteren Druckwert von $2,7 \times 10^{-3}$ mbar begonnen wurden, haben gezeigt, daß erst bei einer — extrapolierten — Lebensdauer von etwa 1800 Jahren der obere Grenzdruck von 10 Torr erreicht wird.

Der Wärmeleitwert $\lambda$ liegt bei den Wärmeisolationselementen in der Größenordnung von einigen $10^{-3}$ Watt/m Kelvin bei Außendrücken von einigen 10 Bar (1 atm) und verschlechtert sich bei wesentlich höheren Außendrücken um höchstens eine Zehnerpotenz.

Die Kieselgur enthält bevorzugt einen Anteil an $SiO_2$, der mehr als 80 Gew.-% beträgt. Der Anteil an $Fe_2O_3$ der Kieselgur liegt bevorzugt zwischen 5 und 15 Gew.-%, der Anteil an $Al_2O_3$ beträgt bevorzugt weniger als 5 Gew.-%, und der Anteil an CaO beträgt bevorzugt weniger als 2 Gew.-%. Darüber hinaus sind in der Kieselgur

noch Spuren von $K_2O$ und MgO enthalten.

Das erfindungsgemäße Verfahren eignet sich besonders gut zur Herstellung von innenliegend isolierten Rohren, bei denen die Rohrwand einen Teil der Hülle darstellt. Der andere Teil der Hülle wird durch einen rohrförmigen Innenmantel aus dünnem Blech gebildet, der in vorgegebenem Abstand von der inneren Oberfläche des Rohrs verläuft und an den Stirnkanten vakuumdicht mit dem Rohr verbunden ist. Zwischen Innenmantel und Rohrwand wird das Isoliermaterial eingefüllt, vorkomprimiert und dann evakuiert. Schließlich wird der Innenraum des Rohres mit einem unter hohem Druck stehenden Fluid gefüllt. Dadurch erweitert sich der Innenmantel irreversibel geringfügig auf einen größeren Innendurchmesser, wodurch das Isoliermaterial die gewünschte Komprimierung erfährt.

Derartige Rohre mit innenliegender Wärmeisolation eignen sich insbesondere auch zur Erdverlegung in Fernwärmenetzen, klinischen Verfahrensanlagen, beim Transport von Kühlflüssigkeiten etc., und besitzen den Vorteil, daß die Temperatur der starren Außenwand im wesentlichen unbeeinflußt von der Betriebstemperatur des Betriebsfluids ist. Dadurch wird die Wärmeausdehnung und daraus resultierende Verwerfung der Rohre weitgehend beseitigt, die bisher insbesondere bei erdverlegten Rohren besonders störend war.

Im folgenden werden Ausführungsbeispiele der Erfindung anhand der Zeichnung näher erläutert. Es zeigt

Fig. 1 eine Aufsicht auf ein ebenes plattenförmiges Element nach der Erfindung;

Fig. 2 einen Querschnitt längs der Linie II-II der Fig. 1;

Fig. 3 ein rohrförmiges Element zum Isolieren eines Rohrs auf der Innenseite; und

Fig. 4 ein rohrförmiges Element zur außenliegenden Isolation eines Rohrs.

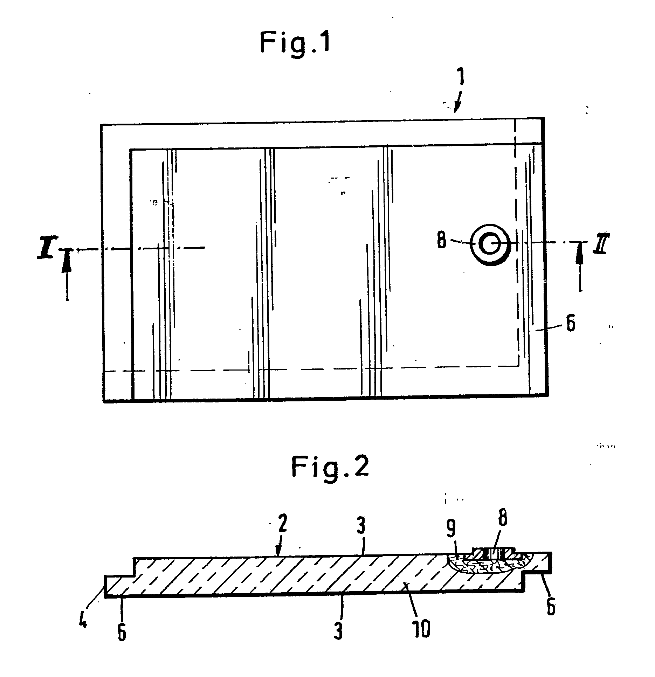

Die Fig. 1 und 2 zeigen ein plattenförmiges Isolationselement aus einer Hülle 2 aus dünner Folie oder Blech, die einen abgesetzten, in der Stärke reduzierten Rand 6 besitzt, um aneinanderstoßende Elemente überlappend anordnen zu können. Die Folien 3 der Hülle 2 sind an ihren Randbereichen 4 diffusionsdicht miteinander verbunden. Diese Verbindung kann beispielsweise durch eine Elektronenstrahlschweißung, eine Rollnahtschweißung, geeignete andere Schweiß- oder Lötverfahren erfolgen. An einer geeigneten Stelle der Umhüllung 2, z. B. am Rand der großflächigen Außen- oder Innenseite, ist eine Öffnung 8 vorgesehen, die in geeigneter Weise vakuumdicht verschließbar ist und zum Einfüllen des Isoliermaterials 10 dient. Das Isoliermaterial 10 besteht aus pulveriger Kieselgur geeigneter Teilchengröße, Struktur und Porenform.

Unter der Öffnung 8, die als Saugstutzen ausgebildet ist, befindet sich eine luftdurchlässige, poröse Matte 9, die aufgrund ihrer geringen Porengröße die darunterliegende Kieselgur 10 nicht in die Saugpumpe entweichen läßt.

Nach Verschließen der Hülle 2 ist die Kieselgur von außen mit einem geeignet hohen Druck komprimiert.

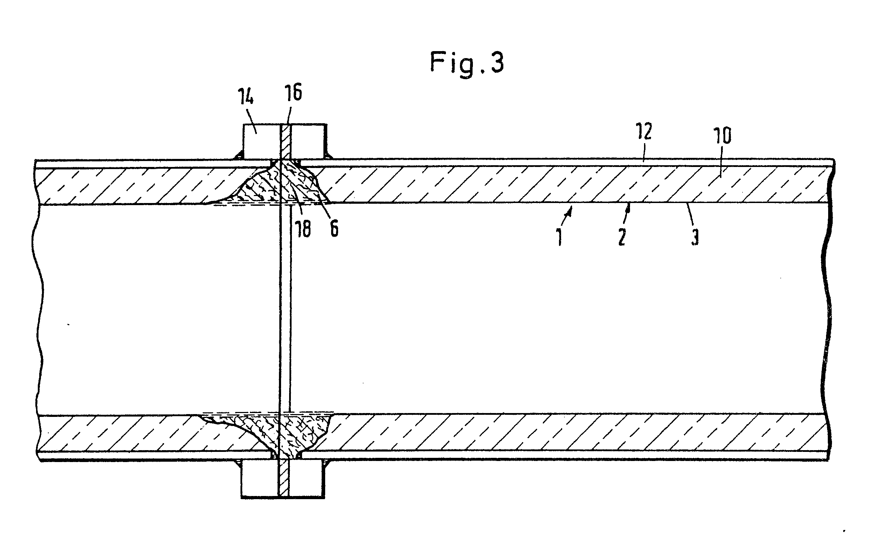

Fig. 3 zeigt eine rohrförmige Anordnung 1 nach der Erfindung, welche sich einem Rohr 12 aus dickem und starrem Material auf der inneren Oberfläche anschmiegt und entsprechend isoliert. Eine Wand der Hülle 2 besteht aus einem dünnen Blech 3 aus rostfreiem Stahl, welches an den Rohrenden z. B. durch eine Schweißnaht 4 innenliegend an das Rohr 12 angeschweißt ist, so daß die Innenfläche des Rohrs 12 gleichzeitig auf einen Teil der Hülle bildet. Kieselgur 10 geeigneter Struktur und Zusammensetzung und Teilchengröße ist zwischen dem dünnen Blech 3 und dem Rohr 12 eingefüllt. An den Rohrenden befinden sich umlaufende Außenflansche 14, zwischen denen ein Flachdichtring 16 liegt. An den Stößen zweier Rohrenden ist das Wärmeisolationselement möglichst eng aneinander liegend auszubilden. Gegebenenfalls sind Zwischenräume zwischen benachbarten Isolationselementen geeignet durch Isoliermaterial 18 auszukleiden.

Nach dem Evakuieren und Verschließen der Hülle 2 wird in den freien Innenraum des isolierten Rohrs ein Fluid, z. B. eine Flüssigkeit, eingeleitet und unter einen gewünschten Druck gesetzt. Der Flüssigkeitsdruck drückt die Wand 3 der Hülle 2 radial nach außen und komprimiert dabei das in die Hülle eingefüllte Isoliermaterial 10. Der Druck innerhalb der Flüssigkeit wird dabei so groß gewählt, daß die Wand 3 irreversibel verformt wird, und daß der zu erwartende spätere Betriebsdruck mindestens erreicht wird. Das außenliegende Rohr 12 aus dickem, starrem Material nimmt dabei die von innen wirkenden Radialkräfte auf. Eine Stützform um das außenliegende Rohr 12 herum ist nicht erforderlich.

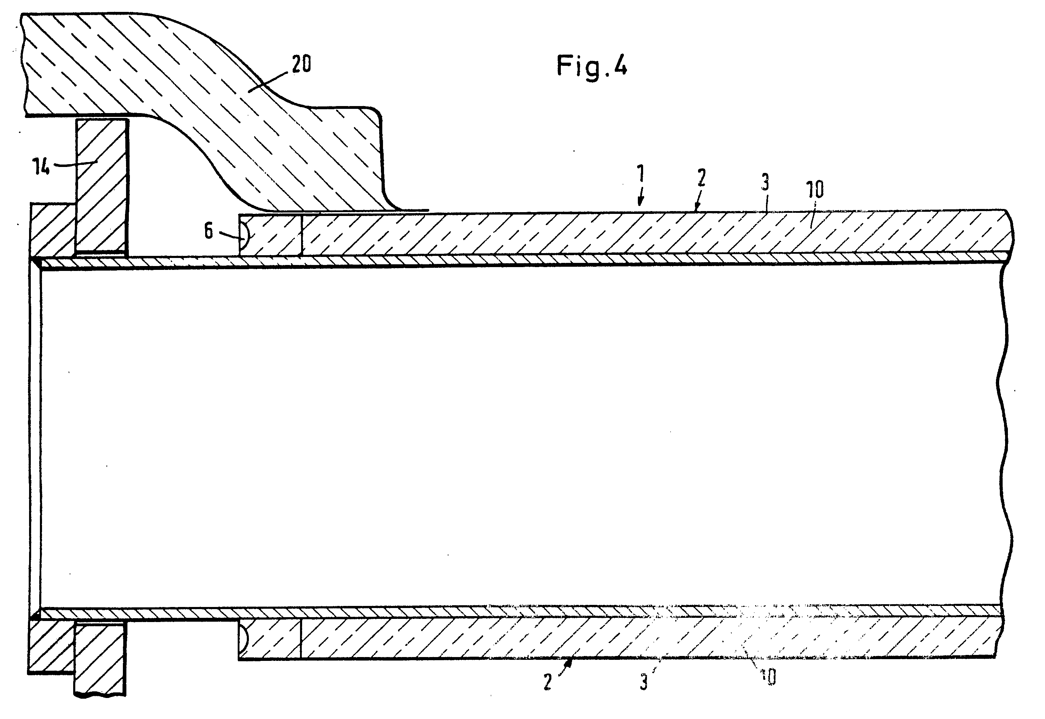

Fig. 4 zeigt ein Rohr 12 mit einem außenliegenden Wärmeisolationselement 1. Das Isolationselement 1 besitzt eine Hülle 2 aus einem allseitig umlaufenden Blech 3. In die Hülle 2 ist pulverige Kieselgur geeigneter Struktur und Teilchengröße eingefüllt, gegebenenfalls vorkomprimiert, anschließend ausgeheizt und evakuiert worden. An den Rohrenden sitzen Außenflansche 14, die mit einer Mineralwolle-Isolation im Flanschbereich abgedeckt sind. Die Mineralwolle-Isolation 20 überlappt das Isolationselement 2 eine vorgegebenen Strecke. Nach Verschließen der Hülle 2 wird auf die Hülle 2 ein vorgegebener Druck ausgeübt, der die Hülle 2 in ihre Endform bringt und die Kieselgur 10 komprimiert.

Die Anordnungen können umlaufende verschweißbare Randbereiche besitzen, um mehrere Anordnungen aneinander ansetzen und miteinander verschweißen zu können. Dadurch ist es möglich, auch größere Behälter mit einer druckdichten thermisch isolierenden Innenverkleidung zu versehen.

## Patentansprüche

1. Verfahren zur Herstellung von Elementen zur innenliegenden Wärmeisolation von Hochdruckbehältern oder Röhren, bei dem eine vakuumdichte Hülle (2) mit porösem, pulverförmigen Isoliermaterial (10) gefüllt wird, welches bei und/oder nach dem Einfüllen zusammen mit der Hülle (2) gasfrei ausgeheizt wird, und die gefüllte Hülle (2) anschließend evakuiert und dann vakuumdicht verschlossen wird, dadurch gekennzeichnet, daß nach dem Verschließen auf die Teile der Hülle (2), die die Innenwand bilden, ein vorgegebener hoher Druck aufgebracht wird, unter dem mindestens diese Teile der Hülle (2) irreversibel verformt werden und das Isolationsmaterial nachkomprimiert wird.

2. Verfahren nach Anspruch 1, dadurch gekennzeichnet, daß das Isoliermaterial (10) vor der Evakuierung mindestens mit Atmosphärendruck in die Hülle (2) gepreßt und dabei vorkomprimiert wird.

3. Verfahren nach Anspruch 1 oder 2, bei dem die Hülle (2) aus einer starren Außenwand (12) mit Rohrquerschnitt, und einer vakuumdicht mit der Außenwand verbundenen innenliegenden flexiblen Innenwand (3) besteht, wobei das poröse pulverförmige Isoliermaterial (10) in den Zwischenraum zwischen Außenwand (12) und flexibler Innenwand (3) eingefüllt wird und beim und/oder nach dem Einfüllen gasfrei ausgeheizt wird, und wobei anschließend der gefüllte Raum zwischen Außenwand und flexibler Innenwand (3) evakuiert und dann vakuumdicht verschlossen wird, dadurch gekennzeichnet, daß anschließend auf die Innenwand (3) ein vom Innenraum des Rohres wirkender, radial nach außen gerichteter Druck aufgebracht wird, der von der Außenwand aufgefangen wird und das Isoliermaterial komprimiert.

4. Verfahren nach Anspruch 3, dadurch gekennzeichnet, daß der Druck durch ein Fluid aufgebracht wird, das in dem durch die Innenwand (3) gebildeten Rohrinnenraum strömt.

5. Verfahren nach einem der Ansprüche 1 bis 4, dadurch gekennzeichnet, daß der vorgegebene hohe Druck einen Wert von einigen 100 Bar besitzt.

6. Wärmeisoliertes Rohr mit einer Außenhaut (12) aus starrem Material, einer mit den stirnseitigen Endbereichen der Außenhaut verbundenen Innenwand (3), mit gasfrei ausgeheiztem, porösem und pulverförmigem Isoliermaterial (10) in dem Raum zwischen Außenwand (12) und Innenwand (3), dadurch gekennzeichnet, daß der gefüllte Raum zwischen Außenwand (12) und Innenwand (3) evakuiert und vakuumdicht verschlossen ist, und daß die Innenwand (3) aus flexiblem Material besteht und irreversibel verformt gegen das Isoliermaterial (10) anliegt.

## Claims

1. Process for making elements for the internal heat insulation of high-pressure vessels or tubes, in which process a vacuum-tight casing (2) is filled with porous pulverulent insulating material (10) which, during and/or after filling, is heated, together with the casing (2), so as to be free of gas, and the filled casing (2) is subsequently evacuated and then closed in a vacuum-tight manner, characterised in that, after the closure, a predetermined high pressure is applied to the parts of the casing (2) which form the inner wall, and under this pressure at least these parts of the casing (2) are deformed irreversibly and the insulating material is further compressed.

2. Process according to claim 1, characterised in that, before evacuation, the insulating material (10) is pressed at least at atmospheric pressure into the casing (2) and is, at the same time, precompressed.

3. Process according to claim 1 or 2, in which the casing (2) consists of a rigid outer wall (12) with a tubular cross-section and of an internal flexible inner wall (3) connected to the outer wall in a vacuum-tight manner, the porous pulverulent insulating material (10) being filled into the interspace between the outer wall (12) and flexible inner wall (3) and, during and/or after filling, being heated so as to be free of gas, the filled space between the outer wall and the flexible inner wall (3) subsequently being evacuated and then closed in a vacuum-tight manner, characterised in that a pressure which acts from the inner space of the tube and is directed radially outwards and which is absorbed by the outer wall and compresses the insulating material is subsequently applied to the inner wall (3).

4. Process according to claim 3, characterised in that the pressure is applied by a fluid which flows in the tubular inner space formed by the inner wall (3).

5. Process according to one of claims 1 to 4, characterised in that the predetermined high pressure has a value of a few hundred bars.

6. Heat-insulated tube with an outer skin (12) made of rigid material, and with an inner wall (3) connected to the end regions of the outer skin at the end face, with porous and pulverulent insulating material (10), heated so as to be free of gas, in the space between the outer wall (12) and inner wall (3), characterised in that the filled space between the outer wall (12) and inner wall (3) is evacuated and closed in a vacuum-tight manner, and in that the inner wall (3) consists of flexible material and rests, irreversibly deformed, against the insulating material (10).

## Revendications

1. Procédé pour la fabrication d'éléments destinés à fournir une isolation thermique intérieure de récipients ou de tubes à haute pression, suivant lequel on remplit une gaine (2) étanche au vide d'une matière isolante (10), poreuse, pulvérisée, qu'on chauffe pour en éliminer les gaz, en commun avec la gaine (2), pendant et/ou après l'introduction, on fait ensuite le vide dans cette gaine (2) remplie et ferme enfin d'une façon étanche au vide, procédé caractérisé en ce que, après la fermeture, on exerce sur les parties de la gaine (2) qui forment la paroi intérieure une pression d'une importance déterminée, sous laquelle au moins ces parties de la gaine (2) sont déformées d'une façon irréversible et la matière isolante subit une compression finale.

2. Procédé suivant la revendication 1, caractérisé en ce que la matière isolante (10) est pressée dans la gaine (2) avant qu'on ne fasse le vide, au moins à la pression atmosphérique, et subit ainsi une compression préalable.

3. Procédé suivant l'une des revendications 1 et 2, dans lequel la gaine (2) est constituée d'une paroi extérieure (12) rigide ayant une section tubulaire, et d'une paroi intérieure (3) flexible, placée à l'intérieur, reliée d'une façon étanche au vide avec la paroi extérieure, la matière isolante (10), poreuse, pulvérisée, étant introduite dans l'espace intermédiaire existant entre la paroi extérieure (12) et la paroi intérieure (3) flexible, et chauffe, pendant et ou après le remplissage pour éliminer les gaz, pendant que l'on fait le vide ensuite dans l'espace rempli entre la paroi extérieure et la paroi intérieure (3) flexible, puis ferme d'une façon étanche au vide, procédé caractérisé en ce que l'on applique ensuite, sur la paroi extérieure (3), une pression dirigée radialement vers l'extérieur, agissant de l'intérieur du tube, qui est absorbée par la paroi extérieure et qui comprime la matière isolante.

4. Procédé suivant la revendication 3, caractérisé en ce que la pression est appliquée au moyen d'un fluide qui coule dans l'espace intérieur du tube formé par la paroi intérieure (3).

5. Procédé suivant l'une quelconque des revendications 1 à 4, caractérisé en ce que la pression élevée prescrite possède une grandeur d'environ 100 bars.

6. Tube calorifugé comportant une peau extérieure (12) en matériau rigide, une paroi intérieure (3) reliée avec la peau extérieure sur les zones frontales extrêmes, et une matière isolante (10) poreuse et pulvérulente, chauffée pour en éliminer les gaz, introduite dans l'espace qui est situé entre la paroi extérieure (12) et la paroi intérieure (3), caractérisé en ce que l'espace rempli situé entre la paroi extérieure (12) et la paroi intérieure (3) est mis sous vide et est fermé d'une façon étanche au vide, et que la paroi intérieure (3) est faite d'un matériau flexible et s'applique par déformation irréversible sur la matière isolante (10).

# Fig.1

# Fig.2

Fig. 3

0 017 095

Fig.4